# EUROPÄISCHE PATENTSCHRIFT

(11) **EP 2 875 264 B1**
(45) Veröffentlichungstag und Bekanntmachung des Hinweises auf die Patenterteilung: **16.11.2016**
(21) Anmeldenummer: 13745609.1
(22) Anmeldetag: 25.07.2013
(51) Int. Cl.: F16J 15/34, F16J 15/38

(54) **ANORDNUNG MIT EINER GASDICHTUNG**
ARRANGEMENT WITH A GAS SEAL
ENSEMBLE POURVU D'UN JOINT ÉTANCHE À GAZ

(30) Priorität: 07.09.2012 DE 102012215887
(43) Veröffentlichungstag der Anmeldung: 27.05.2015
(73) Patentinhaber: Siemens Aktiengesellschaft, 80333 München (DE)
(72) Erfinder: KIRCHNER, Christian, 47441 Moers (DE)
(86) Internationale Anmeldenummer: PCT/EP2013/065687
(87) Internationale Veröffentlichungsnummer: WO 2014/037150

(56) Entgegenhaltungen:
- WO-A1-2006/005359
- DE-U1-202006 010 980
- FR-A5- 2 072 296

## Beschreibung

Die Erfindung betrifft eine Anordnung mit einer Gasdichtung, einen Stator und einem sich entlang einer Achse erstreckenden Rotor zur Abdichtung eines Dichtspalts zwischen dem Rotor und dem Stator umfassend einen rotierenden Rotordichtring und einen statischen Statordichtring, weiterhin umfassend ein rotierendes Befestigungselement, welches den Rotordichtring an dem Rotor axial festlegt.

Gasdichtungen sind für Strömungsmaschinen, insbesondere Verdichter, die als Turbomaschinen ausgebildet sind, bei höherem Drücken in Folge der vergleichsweise geringen Leckage die bevorzugte in Dichtungsform. Beispielsweise im Vergleich zur herkömmlichen Labyrinthdichtung ermöglicht die um eine Größenordnung niedrigere Leckage der Trockengasdichtung einen signifikanten Wirkungsgradzuwachs der entsprechenden Turbomaschine.

Gegenüber den verhältnismäßig einfach aufgebauten Labyrinthdichtungen sind die modernen Trockengasdichtungen vergleichsweise anspruchsvoll hinsichtlich der Betriebsbedingungen. Ein sicherer Betrieb erfordert ein entsprechend aufbereitetes und gereinigtes Sperrgas. Weiterhin sind Trockengasdichtungen für einen sicheren Betrieb auf eine bestimmte Mindestdrehzahl angewiesen.

Bei den eingangs genannten Gasdichtungen stehen sich in der Regel ein rotierender Rotordichtring und ein stehender Statordichtring an einer sich radial erstreckenden Dichtebene mit jeweils einer Dichtfläche an den Dichtringen gegenüber. Damit das Dichtprinzip erfolgreich umgesetzt werden kann, ist es erforderlich, dass die Dichtflächen der beiden Dichtringe präzise gearbeitet und zueinander ausgerichtet sind, so dass unter reproduzierbaren Betriebsbedingungen ein Gleitfilm des Dichtgases sich zwischen den Dichtflächen aufbaut und dementsprechend die Dichtungen berührungslos arbeiten können. Die hohen Präzisionsanforderungen unter sämtlichen denkbaren Betriebsbedingungen werden in der Regel nur mit einer besonderen Werkstoffauswahl erreicht. Der rotierende und der stehende Statordichtring sind deswegen regelmäßig nicht einstückig mit dem Rotor bzw. Stator verbunden, wobei regelmäßig auch der stehende Statordichtring elastisch gegen den rotierenden Rotordichtring verspannt ist. Der rotierende Rotordichtring ist an dem Rotor festgelegt, damit es nicht zu unkontrollierten Relativbewegungen insbesondere in axialer Richtung kommt. Bei herkömmlichen Dichtungsanordnungen kommt es häufig zu einem Fretting an der Axialanlage zwischen dem rotierenden Rotordichtring und einem entsprechenden Axialanlageabsatz des Rotors, da herkömmliche Anordnungen eine axiale Relativbewegung ermöglichen.

Der Amtsbescheid des Deutschen Patent- und Markenamtes zu der prioritätsbegründenen Erstanmeldung DE 10 2012 215887 zitiert die Dokumente: DE 69 04 740 U, DE 41 19 768 A1, DE 102010041 208 A1. Die DE 6904740U zeigt die gleichzeitige axiale Befestigung und Dichtung eines Gleitrings an dem Rotor. Die DE 41 19 768 A1 zeigt eine Gasdichtung mit zwei gegenläufigen Spiralnuten, wobei ein Gleitring elastisch gefedert mit der Welle rotiert und der dazu gehörige Gegenring stationär ausgebildet ist. Die DE 102010041 208 A1 beschäftigt sich mit einem statischen Dichtelement.

Das Dokument DE 10 2012 215887 zeigt eine Anordnung gemäß dem Oberbegriff des Anspruchs 1.

Eine Lösung, die ein Fretting verhindert, ist demnach bisher weder bekannt noch umgesetzt.

Die Erfindung hat es sich daher zur Aufgabe gemacht, den rotierenden Rotordichtring der eingangs genannten Gasdichtung an dem Rotor derart gegen Anregungen axial zu sichern, dass kein Fretting auftreten kann.

Zur Lösung der erfindungsgemäßen Aufgabe wird eine eingangs genannte gattungsgemäße Anordnung vorgeschlagen, welche mit den Merkmalen des kennzeichnenden Teils des Anspruchs 1 weitergebildet ist.

Sämtlich Richtungsangaben, wie axial, radial, Umfangsrichtung oder tangential beziehen sich - wenn es nicht anders angegeben ist - auf die in Anspruch 1 angeführte Rotorachse.

Das erfindungsgemäße Befestigungselement sorgt für eine sichere axiale Festlegung des rotierenden Rotordichtrings an dem Rotor. Mit dem Rotor ist hierbei nicht nur ausschließlich eine massive einstückige Welle gemeint, sondern es sind auch rotierende Bestandteile beispielsweise eines Dichtungsmoduls gemeint, die bevorzugt hülsenartig auf dem Rotor aufgeschoben und dort axial gesichert werden können.

Ein besonderer Vorteil der Erfindung liegt in der erfindungsgemäß sehr einfachen Montage des rotierenden Rotordichtrings auf dem Rotor mittels elastischer Radialverformung des Befestigungselementes, so dass eine Montage sogar ohne Werkzeug ermöglicht werden kann. Gleichfalls ist die Montage des rotierenden Rotordichtrings auf dem Rotor reversibel. Die permanente radiale und axiale Verspannung des rotierenden Rotordichtrings auf dem Rotor sorgt gleichzeitig für eine radiale Ausrichtung des rotierenden Rotordichtrings zu dem Rotor. Weiterhin werden etwaige Anregungen aus dem Rotor auf den Rotordichtring durch das Befestigungselement federnd gedämpft.

Eine vorteilhafte Weiterbildung der Erfindung sieht vor, dass die Verformung des Befestigungselementes nicht plastisch, sondern bevorzugt elastisch erfolgt. Bevorzugt hierbei ist, dass die Verformung des Befestigungselementes ausschließlich im elastischen Verformungsbereich des Materials des Befestigungselementes erfolgt.

Besonders sinnvoll erstreckt sich das Befestigungselement über den gesamten Umfang des Rotors bzw. des rotierenden Dichtelementes, so dass etwaige Asymmetrien vermieden werden und auch keine Unwucht entstehen kann.

Das Befestigungselement ist in einer weiteren bevorzugten Ausführungsform als Helixring ausgebildet. Die Erfahrungen haben gezeigt, dass eine helixartig geformte Feder die Anforderungen an die radiale Verformbarkeit bestmöglich erfüllt. Die Helix des Befestigungselements besteht bevorzugt aus einem Flachprofil und ist besonders bevorzugt aus Stahl, insbesondere aus Edelstahl. Für Anwendungen, bei denen aggressive Gase eine Rolle spielen, insbesondere Schwefelwasserstoff, ist es zweckmäßig, wenn das Material des Befestigungselementes sauergasbeständig ist.

Grundsätzlich ist es zweckmäßig, wenn die Vertiefungen an dem Rotor und dem rotierenden Rotordichtring sich über den gesamten Umfang erstrecken, ebenso wie das Befestigungselement, welches teilweise in diesen Vertiefungen angeordnet ist und den rotierenden Rotordichtring in der Art eines kombinierten Formschlusses und Klemmsitzes mit dem Rotor verspannt. Bevorzugt ist die Anordnung derart ausgebildet, dass ein stationäres Nebendichtelement umfasst ist, welches den rotierenden Rotordichtring gegen den Rotor an einem Rotorabsatz abdichtet, wobei das Nebendichtelement eine axiale Vorspannkraft auf den rotierenden Rotordichtring ausübt. Hierbei ist es sinnvoll, wenn dieser axialen Vorspannkraft des Nebendichtelementes eine Rückstellkraft aus der elastischen Verformung des Befestigungselementes entgegenwirkt, wobei die Rückstellkraft des Befestigungselementes gegen eine axiale Relativverschiebung aus der Solllage des rotierenden Rotordichtrings höher ist als die Vorspannkraft des Nebendichtelementes.

Besonders bevorzugt ist das Befestigungselement derart ausgelegt, dass die Rückstellkraft aus der elastischen Verformung des Befestigungselementes die Summe aus der axialen Vorspannkraft des Nebendichtelementes und der Trägheitskraft aus der Anregung des Rotordichtringes aus tolerierbaren axialen Exzentrizitäten des Rotors im Betrieb (also bei Nenndrehzahl) übersteigt.

Eine vorteilhafte Weiterbildung sieht vor, dass die erste Vertiefung und/oder die zweite Vertiefung axial beidseitig durch jeweils einen radialen Vorstand über zumindest einen Teil des Umfangs begrenzt ist/sind. Dadurch hält das Befestigungselement den Rotordichtring an einer vorgegebenen axialen Position auf dem Rotor.

Zusätzlich oder insbesondere alternativ ist es sinnvoll, wenn das Befestigungselement in dem Solllagebereich des rotierenden Rotordichtrings und dem Rotor zueinander elastisch vorgespannt bzw. verformt ist und die elastisch erzeugte Rückstellkraft den Rotordichtring gegen einen Wellenabsatz oder einzelne Anlage-Schultern an der Welle bzw. den Rotor oder einer Wellenhülse drückt, so dass sich der Rotordichtring in einer axial durch diese Anlage eindeutig definierten Lage befindet.

Bevorzugt ist das Befestigungselement das einzige Element der Befestigung, welches den Rotordichtring mit einer Axialkraft befestigt.

Zur Vermeidung des Frettings ist es bevorzugt, dass das Befestigungselementes radial elastisch verformt ist, wenn sich der rotierende Rotordichtring und der Rotor zueinander in dem Solllagebereich befinden, derart, dass die aus der elastischen Verformung sich ergebende Normalkraft auf die Oberflächen der Vertiefungen eine resultierende Reibungskraft zwischen den Oberflächen und dem Befestigungselementes ergibt, die ein sich im Betrieb ergebendes Drehmoment von dem Rotordichtring auf den Rotor überträgt.

Besonders bevorzugt ist eine Ausgestaltung der Erfindung, bei der das Befestigungselement teilweise in der ersten Vertiefung und teilweise in der zweiten Vertiefung angeordnet ist, derart, dass eine axiale Relativbewegung über einen Solllagebereich hinaus zwischen dem rotierenden Rotordichtring und dem Rotor nur über eine radiale Verformung des Befestigungselementes möglich ist und derart, dass mittels dieser radialen Verformung eine Demontage des Rotordichtrings von dem Rotor möglich ist.

Im Folgenden ist die Erfindung anhand eines speziellen Ausführungsbeispiels zur Verdeutlichung unter Bezugnahme auf Zeichnungen näher beschrieben.
- Figur 1: zeigt eine schematische Darstellung eines Längsschnitts durch eine erfindungsgemäße Anordnung mit einer Gasdichtung,
- Figur 2: zeigt eine schematische Darstellung eines Umfangsabschnitts eines erfindungsgemäßen Befestigungselementes.

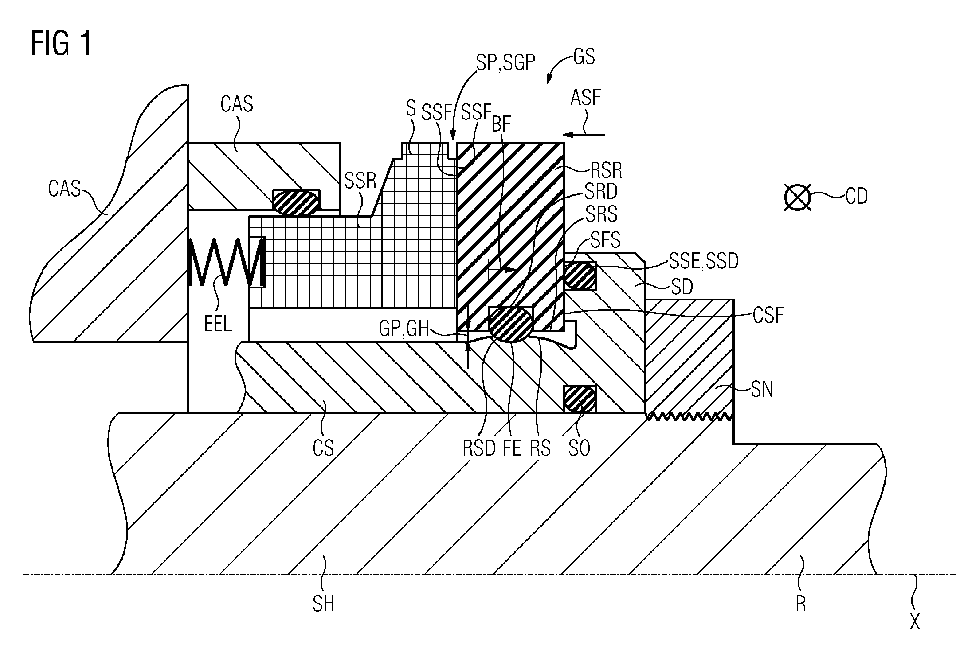

Figur 1 zeigt eine schematische Darstellung eines Längsschnittes durch eine erfindungsgemäße Anordnung mit einer Gasdichtung GS. Die Gasdichtung GS umfasst einen Stator S und einen Rotor R. Entscheidende Elemente des Stators S sind der statische Statordichtring SSR, ein elastisches Element EEL und ein Gehäusebauteil CAS. Wichtige Elemente des Rotors R sind die Welle SH, eine Trägerhülse CS, eine Wellenmutter SN und ein rotierender Rotordichtring RSR. Die Trägerhülse CS erstreckt sich entlang einer Achse X koaxial zu der Welle SH und ist mittels der Wellenmutter SN axial auf der Welle SH gegen einen nicht dargestellten Wellenabsatz gesichert. Eine Dichtung SO dichtet einen verbleibenden Spalt zwischen der Welle SH und der Trägerhülse CS ab. Die Trägerhülse CS weist einen radial hervorstehenden Absatz SD auf mit einer axialen Anlagefläche CSF. Die axiale Anlagefläche CSF weist eine Ausnehmung SSD auf, die der Aufnahme eines stationären Sekundärdichtelementes SSE dient. Das stationäre Sekundärdichtelement SSE liegt an einer Anlagefläche SSF des rotierenden Rotordichtrings RSR an. Das Sekundärdichtelement SSE wird durch die Anlagefläche SFS des rotierenden Rotordichtrings RSR von einer Vorspannkraft des elastischen Elementes EEL und eines Befestigungselementes FE zwischen der Trägerhülse CS und dem rotierenden Dichtelement RSR axial gepresst. Hierbei kommt es im Stillstand auch zu einer axialen Anlage zwischen dem rotierenden Rotordichtring RSR und dem stationären Statordichtring SSR in einer Dichtebene SP, an der sich die Dichtflächen SSF des rotierenden Rotordichtrings RSR und des stationären Statordichtrings SSR gegenüberstehen.

Das Befestigungselement FE ist in dem Bereich eines Spaltes GP zwischen der Trägerhülse CS des Rotors R und dem rotierenden Rotordichtring RSR angeordnet. Der Spalt GP weist eine radiale Spalthöhe GH auf. Der rotierende Rotordichtring RSR ist an der dem Rotor R radialen nach innen weisenden Dichtringoberfläche SRS mit einer ersten Vertiefung SRD versehen und auf der gegenüberliegenden Seite ist der Rotor R bzw. die Trägerhülse CS mit einer zweiten Vertiefung RSD versehen, in welchen Vertiefungen SRD, RSG das Befestigungselement FE jeweils radial teilweise angeordnet ist. Die Vertiefungen RSD, SRD erstrecken sich, ebenso wie das Befestigungselement FE in Umfangsrichtung. Im Betrieb befindet sich der rotierende Rotordichtring RSR in einer axialen Solllage und kann aus diesem Solllagebereich unter axialer Relativbewegung zwischen dem rotierenden Rotordichtring RSR und der Trägerhülse CS bzw. dem Rest des Rotors R nur bewegt werden unter radialer Verformung des Befestigungselementes FE aufgrund der jeweils teilweisen radialen Anordnung in den Vertiefungen RSD bzw. SRD. Diese Verformung des Befestigungselementes FE erfolgt ausschließlich elastisch unter Entstehung einer entsprechend gegen diese Relativbewegung gerichteten Rückstellkraft BF, wobei radiale Komponenten von Verformungskräften des Bewegungselementes FE durch die Ringform des rotierende Rotordichtringes RSR von dem rotierenden Rotordichtring RSR aufgenommen werden. Die Vertiefungen sind gemeinsam mit dem Befestigungselement FE dermaßen abgestimmt, dass permanent eine axiale Vorspannkraft aus dem Befestigungselement FE die stationäre Sekundärdichtung SSE vorspannt entgegengesetzt einer axialen Vorspannkraft ASF aus dem stationären Sekundärdichtelement SSE.

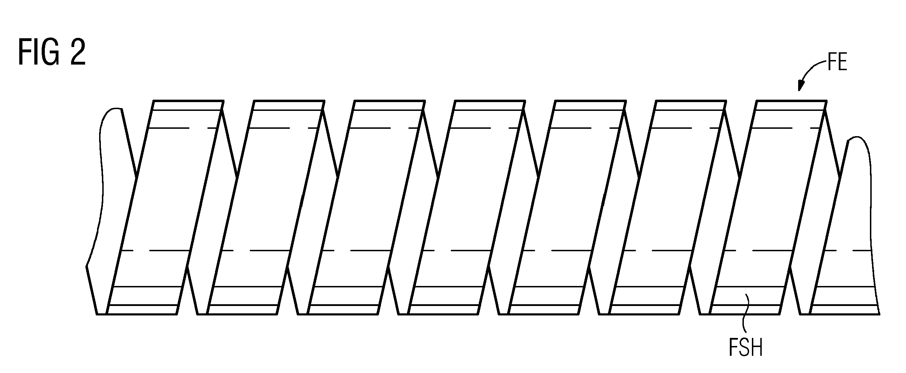

Figur 2 zeigt ein Umfangsabschnitt des Befestigungselementes FE in schematischer Darstellung. Das Befestigungselement FE ist als ein sich in Umfangsrichtung erstreckende Flachstahlhelix ausgebildet. Der Werkstoff ist sauergasbeständig.

Die in der Figur 2 dargestellte Helix-Struktur des Befestigungselementes FE weist den zusätzlichen Vorteil auf, dass nicht nur eine axiale Festlegung des rotierenden Rotordichtrings RSR an dem Rotor R erfolgt, sondern auch eine Festlegung in Umfangsrichtung. Bei der Beaufschlagung des rotierenden Rotordichtrings RSR mit einem Drehmoment, welches geeignet ist, die Position in Umfangsrichtung relativ zu dem Rotor R zu ändern, sorgt die Vorspannung in radialer Richtung an dem Befestigungselement FE dafür, dass die Kanten des Flachprofils bzw. die Kanten des zu einer Helix gewundenen Flachstahlprofils sich jeweils an dem Rotor R bzw. dem rotierenden Rotordichtring RSR abstützen und auf diese Weise eine Relativbewegung verhindern.

## Patentansprüche

1. Anordnung mit einer Gasdichtung (GS), einen Stator (S) und einem sich entlang einer Achse (X) erstreckenden Rotor (R) zur Abdichtung eines Dichtspalts (SGP) zwischen dem Rotor (R) und dem Stator (S) umfassend einen rotierenden Rotordichtring (RSR) und einen statischen Statordichtring (SSR), umfassend ein rotierendes Befestigungselement (FE), welches den rotierenden Rotordichtring (RSR) an dem Rotor (R) axial festlegt, wobei das Befestigungselement (FE) sich zumindest über einen Teil des Umfangs in Umfangsrichtung (CD) erstreckt, **dadurch gekennzeichnet, dass** das Befestigungselement (FE) zumindest teilweise in einem sich axial und in Umfangsrichtung (CD) erstreckenden Spalt (GP) von radialer Spalthöhe (GH) zwischen dem Rotor (R) und dem rotierenden Rotordichtring (RSR) angeordnet ist, wobei der Spalt (GP) seitens des rotierenden Rotordichtrings (RSR) von einer Dichtringoberfläche (SRS) und seitens des Rotors (R) von einer Rotoroberfläche (RS) definiert ist, wobei die Dichtringoberfläche (SRS) eine erste Vertiefung (SRD) und die Rotoroberfläche (RS) eine zweite Vertiefung (RSD) aufweisen, wobei das Befestigungselement (FE) teilweise in der ersten Vertiefung (SRD) und teilweise in der zweiten Vertiefung (RSD) angeordnet ist, derart, dass eine axiale Relativbewegung über einen Solllagebereich hinaus zwischen dem rotierenden Rotordichtring (RSR) und dem Rotor (R) nur über eine radiale Verformung des Befestigungselementes (FE) möglich ist.

2. Anordnung nach Anspruch 1,
wobei das Befestigungselement (FE) radial elastisch verformbar beschaffen ist, so dass es sich bei der axialen Relativbewegung über den Solllagebereich hinaus elastisch verformt.

3. Anordnung nach Anspruch 2,
wobei sich das Befestigungselement (FE) bei einer axialen Relativbewegung über den Solllagebereich hinaus ausschließlich elastisch verformt.

4. Anordnung nach einem der vorhergehenden Ansprüche,
wobei das Befestigungselement (FE) sich über den gesamten Umfang erstreckt.

5. Anordnung nach einem der vorhergehenden Ansprüche,
wobei das Befestigungselement (FE) als eine Flachprofilhelix ausgebildet ist.

6. Anordnung nach einem der vorhergehenden Ansprüche, wobei die Anordnung ein stationäres Nebendichtelement (SSE) umfasst, das den rotierenden Rotordichtring (RSR) gegen den Rotor (R) an einen Rotorabsatz (RSD) abdichtet, wobei das stationäre Sekundärdichtelement eine axiale Vorspannkraft (ASF) auf den rotierenden Rotordichtring (RSR) ausübt.

7. Anordnung nach Anspruch 6,
wobei das Befestigungselement (FE) derart elastisch beschaffen ist, dass es eine axiale Rückstellkraft (BF) gegen eine axiale Relativverschiebung aus der Solllage erzeugt, die höher ist als die axiale Vorspannkraft (ASF) des stationären Sekundärdichtelementes (SSE).

8. Anordnung nach Anspruch 5,
wobei das Befestigungselement (FE) eine Flachstahlhelix umfasst.

9. Anordnung nach Anspruch 8,
wobei der Werkstoff der Flachstahlhelix sauergasbeständig ist.

10. Anordnung nach einem der vorhergehenden Ansprüche,
wobei die erste Vertiefung (SRD) und/oder die zweite Vertiefung (RSD) axial beidseitig durch jeweils einen radialen Vorstand über zumindest einen Teil des Umfangs begrenzt ist/sind.

11. Anordnung nach einem der vorhergehenden Ansprüche, wobei das Befestigungselementes (FE) radial elastisch verformt ist, wenn sich der rotierende Rotordichtring (RSR) und der Rotor (R) zueinander in dem Solllagebereich befinden, derart, dass die aus der elastischen Verformung sich ergebende Normalkraft auf die Oberflächen der Vertiefungen (SRD, RSD) eine resultierende Reibungskraft zwischen den Oberflächen und dem Befestigungselementes (FE) ergibt, die ein sich im Betrieb ergebendes Drehmoment von dem Rotordichtring (RSR) auf den Rotor (R) überträgt.

## Claims

1. An arrangement with a gas seal (GS), a stator (S) and a rotor (R) which extends along an axis (X) for sealing a sealing gap (SGP) between the rotor (R) and the stator (S), comprising a rotating rotor sealing ring (RSR) and a static stator sealing ring (SSR), comprising a rotating fastening element (FE) which fixes the rotating rotor sealing ring (RSR) axially on the rotor (R), the fastening element (FE) extending at least over part of the circumference in the circumferential direction (CD), **characterized in that** the fastening element (FE) is arranged at least partially in a gap (GP) of radial gap height (GH) which extends axially and in the circumferential direction (CD) between the rotor (R) and the rotating rotor sealing ring (RSR), the gap (GP) being defined on the side of the rotating rotor sealing ring (RSR) by a sealing ring surface (SRS) and on the side of the rotor (R) by a rotor surface (RS), the sealing ring surface (SRS) having a first depression (SRD) and the rotor surface (RS) having a second depression (RSD), the fastening element (FE) being arranged partially in the first depression (SRD) and partially in the second depression (RSD), in such a way that an axial relative movement beyond a setpoint position range between the rotating rotor sealing ring (RSR) and the rotor (R) is possible only via a radial deformation of the fastening element (FE).

2. Arrangement according to Claim 1, the fastening element (FE) being of radially elastically deformable configuration, with the result that it deforms elastically during the axial relative movement beyond the setpoint position range.

3. Arrangement according to Claim 2, the fastening element (FE) deforming exclusively elastically during an axial relative movement beyond the setpoint position range.

4. Arrangement according to one of the preceding claims, the fastening element (FE) extending over the entire circumference.

5. Arrangement according to one of the preceding claims, the fastening element (FE) being configured as a flat section helix.

6. Arrangement according to one of the preceding claims, the arrangement comprising a stationary auxiliary sealing element (SSE) which seals the rotating rotor sealing ring (RSR) against the rotor (R) on a rotor shoulder (RSD), the stationary secondary sealing element exerting an axial prestressing force (ASF) on the rotating rotor sealing ring (RSR).

7. Arrangement according to Claim 6, the fastening element (FE) being of elastic configuration in such a way that it generates an axial restoring force (BF) counter to an axial relative displacement out of the setpoint position, which axial restoring force (BF) is higher than the axial prestressing force (ASF) of the stationary secondary sealing element (SSE).

8. Arrangement according to Claim 5, the fastening element (FE) comprising a flat steel helix.

9. Arrangement according to Claim 8, the material of the flat steel helix being sour gas resistant.

10. Arrangement according to one of the preceding claims, the first depression (SRD) and/or the second depression (RSD) being delimited axially on both sides over at least part of the circumference by in each case one radial projection.

11. Arrangement according to one of the preceding claims, the fastening element (FE) being deformed radially elastically when the rotating rotor sealing ring (RSR) and the rotor (R) are situated with respect to one another in the setpoint position range, in such a way that the perpendicular force on the surfaces of the depressions (SRD, RSD) which results from the elastic deformation gives rise to a resulting frictional force between the surfaces and the fastening element (FE), which frictional force transmits a torque which arises during operation from the rotor sealing ring (RSR) to the rotor (R).

## Revendications

1. Agencement ayant un joint (GS) étanche à gaz, un stator ( S) et un rotor (R) s'étendant le long d'un axe (X) pour rendre étanche un jeu (SGP) entre le rotor (R) et le stator (S), comprenant une bague (RSR) d'étanchéité rotorique tournante et une bague (SSR) d'étanchéité statorique fixe comprenant un élément de fixation tournant qui fixe axialement l'élément (RSR) d'étanchéité rotorique tournant au rotor (R),
par lequel
l'élément (FE) de fixation s'étend, au moins sur une partie du pourtour dans la direction (CD) périphérique, **caractérisé en ce que**
l'élément (FE) de fixation est disposé au moins en partie, dans l'intervalle (GB) de hauteur (GH) radiale entre le rotor (R) et la bague (RSR) d'étanchéité rotorique tournante, l'intervalle (GB) étant défini, du côté de la bague (RSR) d'étanchéité rotorique tournante, par une surface (SRS) de bague d'étanchéité et, du côté du rotor (R), par une surface (RS) du rotor, la surface (SRS) de bague d'étanchéité ayant une première cavité (SRB) et la surface (RS) du rotor une deuxième cavité (RSD), l'élément (FE) de fixation étant disposé en partie dans la première cavité (SRD) et en partie dans la deuxième cavité (RSD) de manière à ce qu'un mouvement relatif au-delà d'une plage de position de consigne entre la bague (RSR) d'étanchéité rotorique tournante et le rotor (R) ne soit possible que par une déformation radiale de l'élément (FE) de fixation.

2. Agencement suivant la revendication 1,
dans lequel l'élément (FE) de fixation est déformable élastiquement radialement, de manière à se déformer élastiquement lors du mouvement relatif axial au-delà de la plage de position de consigne.

3. Agencement suivant la revendication 2,
dans lequel l'élément (FE) de fixation se déforme exclusivement élastiquement lors d'un mouvement relatif axial au-delà de la plage de position de consigne.

4. Agencement suivant l'une des revendications précédentes, dans lequel l'élément (FE) de fixation s'étend sur tout le pourtour.

5. Agencement suivant l'une des revendications précédentes, dans lequel l'élément (FE) de fixation est constitué sous la forme d'une hélice à profil plat.

6. Agencement suivant l'une des revendications précédentes, dans lequel l'agencement comprend un élément d'étanchéité secondaire fixe, qui rend étanche la bague (RSR) d'étanchéité rotorique tournante par rapport au rotor (R) sur un ressaut (RSD) du rotor, l'élément d'étanchéité secondaire fixe appliquant une force (ASF) axiale de précontrainte à la bague (RSR) d'étanchéité rotorique tournante.

7. Agencement suivant la revendication 6,
dans lequel l'élément (FE) de fixation est élastique de manière à produire, à partir de la position de consigne, une force (BF) axiale de rappel à l'encontre d'un déplacement axial relatif, qui est plus intense que la force (ASF) axiale de précontrainte de l'élément (SSR) d'étanchéité secondaire fixe.

8. Agencement suivant la revendication 5,
dans lequel l'élément (FE) de fixation comprend une hélice en acier plat.

9. Agencement suivant la revendication 8,
dans lequel le matériau de l'hélice en acier plat est résistant à du gaz acide.

10. Agencement suivant l'une des revendications précédentes,
dans lequel la première cavité (SRB) et/ou la deuxième cavité (RSD) est/sont délimitée (s) des deux côtés axialement par respectivement une partie en saillie radiale sur au moins une partie du pourtour.

11. Agencement suivant l'une des revendications précédentes,
dans lequel l'élément (FE) de fixation est déformé élastiquement radialement lorsque la bague (RSR) d'étanchéité rotorique tournante et le rotor se trouvent, l'un par rapport à l'autre, dans la plage de position de consigne de manière à ce que la force normale provenant de la déformation élastique donne sur les surfaces des cavités (SRD, RSD) une force de frottement résultante entre les surfaces et l'élément (FE) de fixation, force qui transmet au rotor (R) un couple de rotation se produisant en fonctionnement de la bague (RSR) d'étanchéité rotorique tournante.
